# EUROPEAN PATENT APPLICATION

(11) **EP 1 191 759 A2**
(43) Date of publication of application: **27.03.2002**
(21) Application number: 01119800.9
(22) Date of filing: 29.08.2001
(51) Int. Cl.: H04L 29/06, H04Q 3/00

(54) **System and method of transporting bearer traffic in a signaling server using real-time bearer protocol**

(30) Priority: 30.08.2000 US 651900
(71) Applicant: Alcatel USA Sourcing, L.P., Plano, Texas 75075 (US)
(72) Inventor: Dubois, Gerry, Lucas, TX 75002 (US)
(74) Representative: Dreiss, Fuhlendorf, Steimle & Becker

(57) **Abstract**

A system and method of transporting bearer traffic in a signaling server using a real-time bearer protocol (RBP) structure, wherein the signaling server is arranged as a plurality of interconnected computing elements or nodes. The RBP structure includes a data link header which comprises destination and source MAC addresses associated with a select pair of computing nodes of the signaling server. An RBP header block is provided which includes an RBP indicator, a mail box for indicating the type of bearer payload, and a multi-frame control portion. The total number of frames of an RBP PDU is indicated in the multi-frame control portion. A variable data block for holding the bearer payload is provided in the RBP frame which is dimensioned as a low overhead frame having a known format for optimizing transport speed.

## Description

### CROSS-REFERENCE TO RELATED APPLICATIONS

This application discloses subject matter related to the subject matter disclosed in the following commonly-assigned patent applications: (1) "Method and Apparatus for Routing Alarm Signals in a Signaling Server," filed March 31, 2000, Ser. No. 09/540,308 (Attorney Docket Number: 1285-0007), in the name(s) of: Val Teodorescu; and (2) "Clock Distribution Scheme in a Signaling Server," filed March 31, 2000, Ser. No. 09/541,002 (Attorney Docket Number: 1285-0008), in the name(s) of: Val Teodorescu.

### BACKGROUND OF THE INVENTION

### Technical Field of the Invention

The present invention relates to transport protocols. More particularly, but without any limitation, the present invention is directed to a system and method of transporting bearer traffic (e.g., signaling message information) in a signaling server using a lightweight, low latency real-time bearer protocol (RBP).

### Description of Related Art

Out-of-band signaling establishes a separate channel for the exchange of signaling information between call component nodes in order to set up, maintain and service a call in a telephony network. Such channels, called signaling links, are used to carry all the necessary signaling messages between the nodes. Thus, for example, when a call is placed, the dialed digits, trunk selected, and other pertinent information are sent between network switches using their signaling links, rather than the trunks which will ultimately carry the voice bearer traffic, i.e., conversation.

Out-of-band signaling has several advantages that make it more desirable than traditional in-band signaling. First, it allows for the transport of more data at higher speeds than multi-frequency (MF) outpulsing used in the telephony networks without it. Also, because of separate trunks and links, signaling can be done at any time in the entire duration of the call, not just at the beginning. Furthermore, out-of-band signaling enables signaling to network elements to which there is no direct trunk connection.

Signaling System No. 7 (SS7) provides a packet-based signaling architecture that has become the out-of-band signaling scheme of choice between telephony networks and between network elements worldwide. Three essential components are defined in a signaling network based on SS7 architecture. Signal or Service Switching Points (SSPs) are basically telephone switches equipped with SS7-capable software that terminate signaling links. SSPs generally originate, terminate, or switch calls. Signal Transfer Points (STPs) are the packet switches of the SS7 network. In addition to certain specialized functions, they receive and route incoming signaling messages towards their proper destination. Finally, Service Control Points (SCPs) are databases that provide information necessary for advanced call-processing and Service Logic execution.

As is well known, SS7 signaling architecture, effectuated as a multi-layered protocol, is standardized under the American National Standards Institute (ANSI) and the International Telecommunications Union (ITU) to operate as the common "glue" that binds the ubiquitous autonomous networks together so as to provide a "one network" feel that telephone subscribers have come to expect. Furthermore, SS7 signaling has made it possible to provision a host of advanced services (or, Value-added Services) based on Intelligent Network (IN) / Advanced Intelligent Network (AIN) architectures in both wireless and wireline telecommunications networks.

The exponential increase in the number of local telephone lines, mobile subscribers, pages, fax machines, and other data devices, e.g., computers, Information Appliances, etc., coupled with deregulation that is occurring worldwide today is driving demand for small form factor, high capacity STPs which must be easy to maintain, provide full SS7 functionality with so-called "five nines" operational availability (i.e., 99.999% uptime), and provide the capability to support future functionality or features as the need arises. Further, as the subscriber demand for more service options proliferates, an evolution is taking place to integrate IN-capable SCP functionality within STP nodes.

While it is generally expected that a single platform that supports large-database, high-transaction IN services as well as high-capacity packet switching (hereinafter referred to as a signaling server platform) will reduce equipment costs, reduce network facility costs and other associated costs while increasing economic efficiency, those skilled in the art should readily recognize that several difficulties must be overcome in order to integrate the requisite functionalities into a suitable network element that satisfies the stringent performance criteria required of telecommunications equipment. Daunting challenges arise in designing a compact enough form factor that is efficiently scalable, ruggedized, and modularized for easy maintenance, yet must house an extraordinary constellation of complex electronic circuitry, e.g., processors, control components, timing modules, I/O, line/link interface cards which couple to telephony networks, etc., that is typically required for achieving the necessary network element functionality. Whereas the electronic components may themselves be miniaturized and modularized into cards or boards, interconnecting a large number of such cards via suitable bus systems and effectuating rapid communication among such interconnected systems for transporting information (for example, signaling message information) poses many obstacles.

The existing communication protocol schemes for transporting data are beset with numerous deficiencies and drawbacks in this regard. First, the current protocols are optimized primarily for networks which cover geographic areas ranging from local areas to metropolitan and wide areas, involving potentially a huge number of nodes coupled via gateways, routers, bridges, etc. These protocols are provided with routing capability and large address spaces, in addition to being Layer-1 neutral in general (i.e., independent of physical media). Accordingly, such protocols tend to be "heavyweight"protocols due to their large overhead, which requires rather sizable processing.

Second, and relatedly, while the current protocols are flexible, they are unattractive (at least in part due to their significant overhead) for transporting bearer traffic within a network element (such as a signaling server) to be deployed in a high-transaction telecommunication environment, in terms of both real-time processing and bandwidth utilization. Where bearer traffic (i.e., signaling information) is required to be rapidly transported among a relatively smaller number of nodes (i.e., multiple processors controlling signaling links), it is necessary that the transport protocol not only be of low latency but must also support high traffic levels.

### SUMMARY OF THE INVENTION

Accordingly, the present invention is directed, in one aspect, to a system of transporting bearer traffic in a signaling server using a lightweight real-time bearer protocol (RBP) structure for optimizing transport processing. Preferably, the signaling server is arranged as a plurality of interconnected computing elements (CEs) or nodes disposed in an Ethernet fabric. The RBP structure includes a data link header which comprises destination and source media access control (MAC) addresses associated with a select pair of CE nodes of the signaling server. An RBP header block is provided which includes an RBP indicator, a mail box for indicating the type of bearer payload, and a multi-frame control portion. The total number of frames of a protocol data unit (PDU) of the RBP is indicated in the multi-frame control portion. A variable data block for holding or carrying the bearer payload is provided in the RBP frame which is dimensioned as a low overhead frame having a known format (e.g., Ethernet frame or ATM frame) for optimizing transport and processing speed within the signaling server.

In another aspect, the present invention is directed to a method of transporting message information within a network element organized as a plurality of interconnected computing nodes wherein each computing node controls one or more links disposed in a telecommunications network. The method commences by receiving the message information on a particular link of the network element. A destination MAC address and a source MAC address associated with the message information are determined thereafter. The message information and the MAC address information are packaged into a lightweight frame or frames optimized for rapid transport from the source link element to the destination link element. The frames comport with a real-time bearer protocol having a header and variable payload. The PDUs are then transported based on the source and destination MAC addresses.

### BRIEF DESCRIPTION OF THE DRAWINGS

A more complete understanding of the present invention may be had by reference to the following Detailed Description when taken in conjunction with the accompanying drawings wherein:
FIG. 1 depicts a high-level architectural view of a signaling server where a lightweight transport protocol such as the real-time bearer protocol (RBP) provided in accordance with the teachings of the present invention may be advantageously deployed;
FIGS. 2A and 2B illustrate two scalable, redundant interconnect (switch fabric) architectures of an exemplary signaling server;
FIG. 3 depicts a functional block diagram of an exemplary embodiment of a signaling server;
FIGS. 4A - 4D depict exemplary Ethernet frames for deploying the RBP of the present invention;
FIG. 5 depicts an exemplary header portion of the RBP in accordance with the teachings of the present invention;
FIG. 6 depicts an exemplary PDU of the RBP of the present invention;
FIG. 7 depicts additional fields provided in an RBP frame based on payload characteristics; and
FIG. 8 depicts a table which illustrates the packaging of a 20-byte message signal unit (MSU) in the RBP format in accordance with the teachings of the present invention.

### DETAILED DESCRIPTION OF THE DRAWINGS

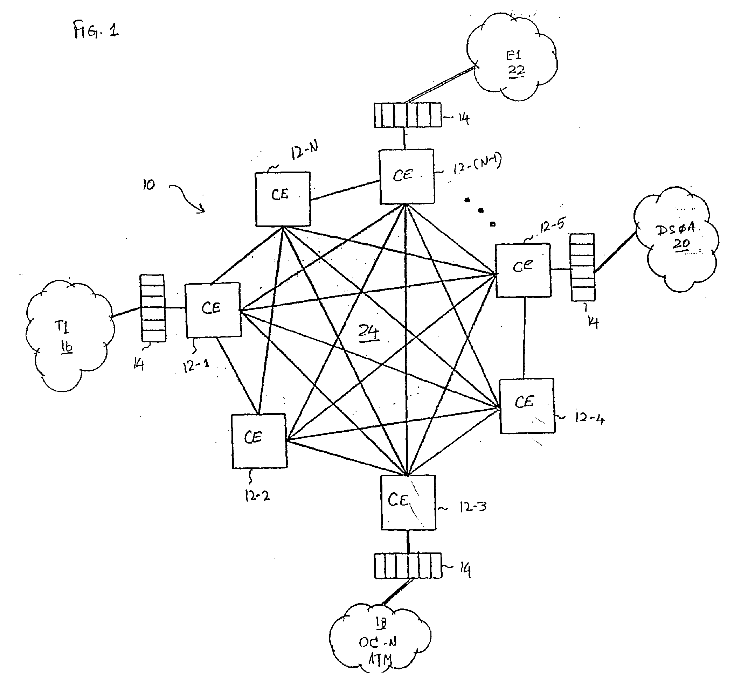

In the drawings, like or similar elements are designated with identical reference numerals throughout the several views thereof, and the various elements depicted are not necessarily drawn to scale. Referring now to FIG. 1, depicted therein is a high-level architectural view of a telecommunications network node, e.g., a signaling server 10 having enhanced STP functionality, disposed in a heterogeneous network environment, where a lightweight transport protocol such as the real-time bearer protocol scheme set forth in greater detail hereinbelow may be advantageously utilized. The signaling server 10 is preferably based on a distributed architecture of loosely coupled computing/control elements (CEs) or processors, e.g., reference numerals 12-1 through 12-N, networked together via a high-speed switching fabric 24. Each processor performs specific functions in the control and maintenance of particular devices (not shown in this FIG.) and in the control of signaling, administrative, and/or maintenance functions. For example, one or more CEs are responsible for controlling the interfacing with the heterogeneous telecommunications network environment within which the signaling server 10 is disposed for providing the signaling/switching services. A plurality of link interface cards (not explicitly shown) operable to support communication ports are accordingly controlled by at least a portion of the CEs of the signaling server 10. In the exemplary architecture shown in FIG.1, a T1 network 16 operating at 1.544 megabits per second (Mbps) (equivalent to 24 voice channels) is linked to the signaling server 10 via a plurality of ports 14 controlled by CE 12-1. Similarly, an Asynchronous Transfer Mode (ATM) network 18 capable of operating at a particular rate, e.g., Optical Carrier (OC)-3, OC-12, OC-48, OC-N, etc., is linked to the signaling server 10 via ports 14 controlled by CE 12-3. In analogous fashion, a DS-0A network 20 operating at 64 kilobits per second (Kbps) and an E1 network 22 operating at 2.048 Mbps are also exemplified herein. It should be apparent to those skilled in the art that networks operating with other standards and protocols, e.g., Synchronous Optical Network (SONET) and its companion Synchronous Digital Hierarchy (SDH), Internet Protocol (IP), etc., may also be linked to the signaling server 10 in certain implementations.

It should be appreciated, accordingly, that the various CEs are disposed in a communication relationship within the signaling server so as to effectuate its signaling/switching functionality. Thus, signaling messages from one or more link interface cards (and/or the CE associated therewith) are transported via the fabric 24 to other link interface cards (and their CEs associated therewith). It is therefore convenient for purposes of the present invention to consider these various CEs as the source and destination "nodes" between which messages need to be rapidly transported in order to support the throughput required of the signaling server 10.

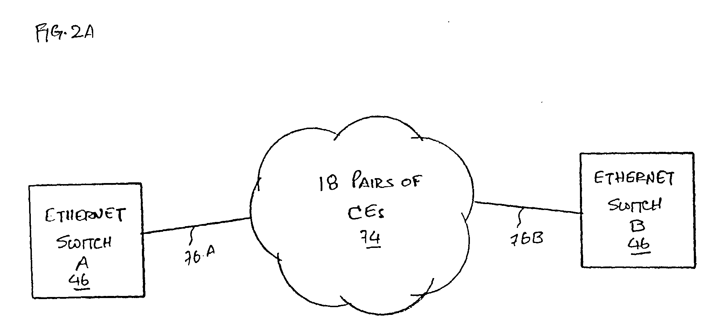

FIGS. 2A and 2B illustrate two scalable, redundant interconnect switch fabrics of an exemplary signaling server where the RBP scheme of the present invention may be used for transporting internal message communication within the signaling server. In accordance with a presently preferred exemplary embodiment of the present invention, two scalable Ethernet switch fabric architectures having redundancy for providing the signaling server's internal messaging backbone are exemplified. The switch fabric is effectuated by means of one or more interconnected Ethernet switches (e.g., reference numeral 46). Preferably, the Ethernet switches 46 are capable of providing full wireline switching at 100base-T speed. As exemplified in the basic configuration depicted in FIG. 2A, the switching network 46 comprises two separate switching fabrics, an A-side fabric and a B-side fabric, in order to support full redundancy. Each CE in the CE constellation 74 (corresponding to the signaling server's internal communication nodes alluded to hereinabove) is provided with two 100 Mbps Ethernet connections, one on the A-side and the other on the B-side of the switching network.

In the basic configuration of FIG. 2A, two Ethernet switches are provided which can connect up to a maximum number of CEs based on the number of ports available on each Ethernet switch. For example, if each switch has 36 ports, then a maximum raw connectivity for 36 CEs (or 18 pairs of CEs) is available. The connection paths 76A and 76B exemplify the 100 Mbps links between the Ethernet switch ports and CEs.

Larger configurations of the signaling server are accomplished by adding more Ethernet switches into each side of the switching network, thus providing additional CE connectivity. Further, each switch in the internal switching network is preferably connected to every other switch using a gigabit link (1 Gbps or 1000 Mbps). FIG. 2B exemplifies a switching fabric for connecting 144 CEs (or 72 pairs) using four pairs of 36-port Ethernet switches. The inter-switch gigabit links are exemplified by six connection paths 78A on the A-side of the switching fabric and six connection paths 78B on the B-side of the switching fabric.

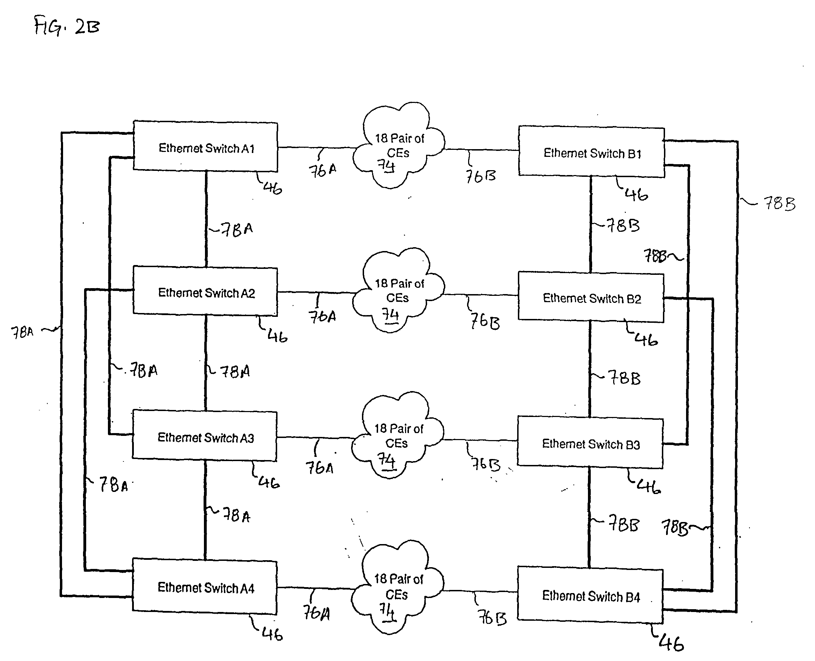

FIG. 3 depicts a functional block diagram of an exemplary embodiment of the signaling server 10 wherein the plurality of CEs are grouped together based on their functionality as follows: Peripheral and Load CEs (PLCE) 32 coupled to an Operations, Administration and Maintenance (OAM) Agent 34 which is responsible for performing Operation Support System (OSS) interfaces; Signaling Management CEs (SMCE) 38; Database Management CEs (DMCE) 42; Traffic Metering and Measurement CEs (TMMCE) 40; and, depending upon the number of network link interfaces and their type, a plurality of Signaling Link CEs (SLCE) 42-1 through 42-N and a plurality of Signaling Service CEs (SSCE) 44-1 through 44-M. A plurality of clocks 36 are also provided under the control of PLCE 32 for furnishing the various time base signals required for the operation of the signaling server.

The PLCE 32 is provided as the logical master CE of the signaling server and controls the following functionality:
- System initialization and loading: Provides loading segment sources upon power-up for all processors and devices of the system, except for the OAM Agent 34 and a Local Service Control Point (not depicted in FIG. 3);
- Command handlers: Processes user commands (i.e., commands generated by the SS7 network operator that operates and maintains the signaling server) and dispatches them to proper subsystems;
- Centralized configuration management: Provides maintenance processing on processors and devices;
- Centralized fault handling: Receives and processes faults detected in the signaling server system. Coordinates with configuration management to remove faulty devices from the system;
- Centralized test management: Processes all test requests for processors and devices. Coordinates between different processors/devices for tests that span multiple devices;
- Event reporting: Handles processing events output to the user;
- Alarm handling: Processes alarms presented to the user;
- Core/Crash management: Processes data from processor crashes;
- Clock management: Controls the system timing generator(s) (STG) which are responsible for generating appropriate system clock and control signals used in the signaling server; and
- System Alarm Card: Sends alarm information to customer equipment.

The OAM Agent 34 operates in conjunction with the PLCE 32 as a co-master of the signaling server system and shares the OAM functionality therewith. The OAM Agent 34 is responsible for providing user interfaces (preferably Web-based graphic user interfaces) and includes local service management, reset controller management, Switching Control Center System (SCCS) functionality, and Signaling Engineering and Administration System (SEAS) functionality.

Continuing to refer to FIG. 3, the TMMCE 40 contains a centralized collection mechanism for all measurement data collected in the signaling server system. The SMCE 38 manages the SS7 subsystem which comprises the following: SS7 route management; SS7 traffic management; SS7 provisioning; and Signaling Connection Control Part (SCCP) management. Each SLCE (e.g., reference numeral 42-1) controls SS7 link hardware and contains up to and through Message Transfer Part (MTP) Level 3 and SCCP functionality. The SLCE is responsible, accordingly, for the following: MTP2/MTP3 functionality (effectuated via message signal units or MSUs); SS7 link management; SCCP with Global Title Translation (GTT); and gateway screening.

The SSCE (e.g., SSCE 44-1), which controls no SS7-related hardware, contains logical database and screening service functionality for the SS7 subsystem. Its functionality includes: Local Number Portability (LNP) services; SCCP with GTT; gateway screening; and MTP buffering and routing. The DMCE 42 also controls no SS7-related hardware and provides the LNP and Application Location Register (ALR) functionality for the SSCEs.

Additional details regarding the various CEs and related subsystems of the signaling server may be found in the commonly-assigned related patent applications which have been cross-referenced hereinabove and are incorporated by reference herein.

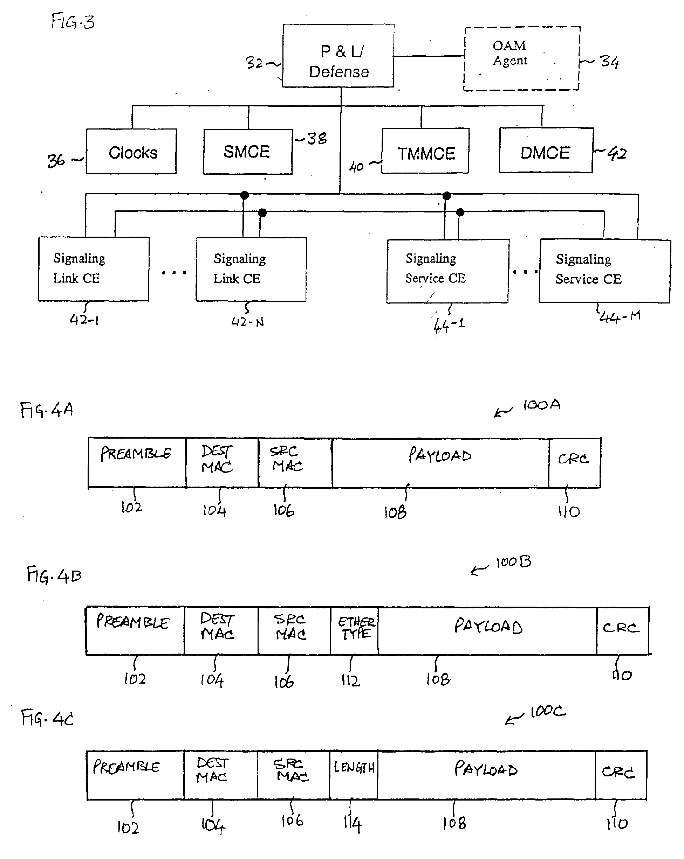

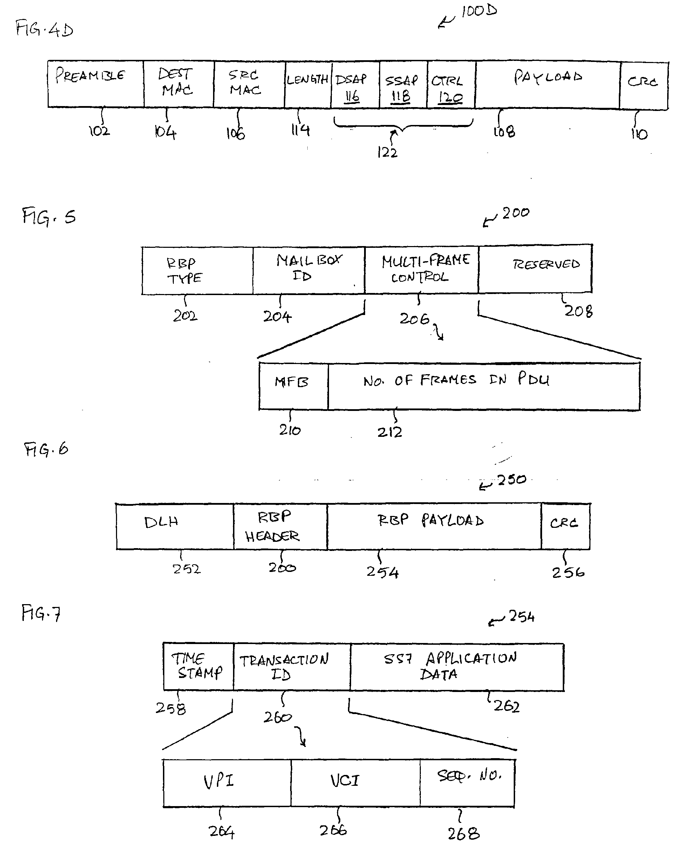

FIGS. 4A- 4D depict exemplary Ethernet frames for deploying the RBP scheme of the present invention in order to transport the signaling message traffic (e.g., SS7 signaling traffic) as bearer traffic (i.e., "payload") among the interconnected CEs (such as, e.g., from source SLCEs to destination SLCEs) of the signaling server. Reference numeral 100A refers to a basic Ethernet frame wherein a preamble 102 (e.g., comprising 8 bytes) is provided which is used on the physical medium (e.g., wires) for clock synchronization. A destination media access control (MAC) address field 104 and a source MAC address field 106 are provided for uniquely identifying the destination and source CE nodes. In the basic Ethernet frame format exemplified herein, the MAC address fields comprise 6 bytes each. A cyclic redundancy check (CRC) field 110 (4 bytes long) is provided in this exemplary frame embodiment for ensuring data integrity. A payload field 108 comprising 48 - 1,500 bytes may be provided for transporting bearer traffic.

Reference numeral 100B refers to a refined Ethernet frame format wherein a 2-byte Ethertype field 112 is included for distinguishing among the various flavors of Ethernet frame formats available for message transporting. Another refined Ethernet frame format is identified by reference numeral 100C in FIG. 4C wherein a length field 114 is provided. The destination MAC address 104, source MAC address 106 and the length field 114 are collectively referred to as the Data Link Header (DLH) in accordance with the IEEE 802.3 standard.

Reference numeral 100D in FIG. 4D refers to a yet another refined Ethernet frame format wherein a 3-byte Link Layer Control (LLC) field 122 is provided in accordance with the IEEE 802.3 standard. The LLC field 122 comprises a destination service access point (DSAP) field 116, a source service access point (SSAP)118 and a control field 120.

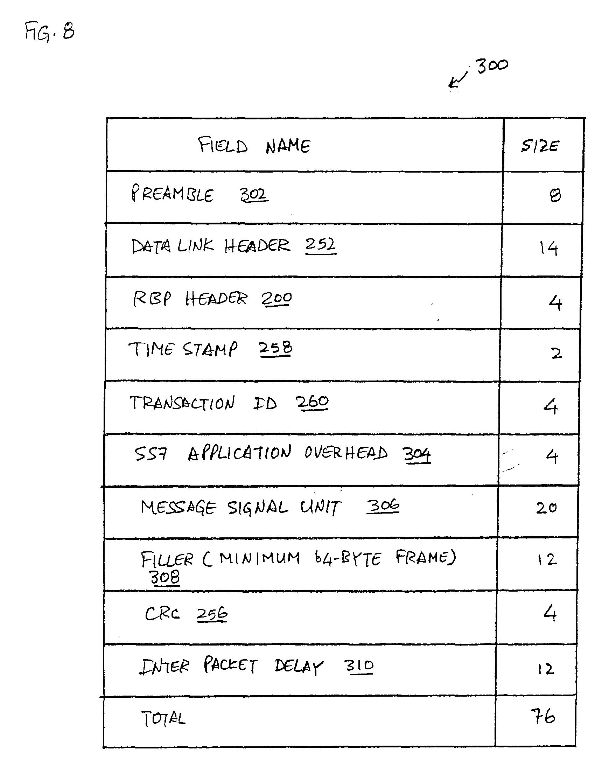

FIG. 5 depicts an exemplary embodiment of a header portion 250 of an RBP frame provided in accordance with the teachings of the present invention. The RBP scheme is preferably operable as a low overhead, low latency data transport mechanism between the CEs of the signaling server. Because the CEs are arranged in a flat architecture (such as, e.g., a System Area Network (SAN)), capabilities that typically give rise to additional overhead (thus, extra CPU consumption) in heavyweight protocols are advantageously avoided in the RBP scheme. Thus, an extremely lightweight transport protocol is provided for supporting traffic levels of about 1.0 Erlang or more in densely populated line interface card environments having 48 channels at DS-0 speeds (64 Kbps).

The RBP header portion 250 preferably comprises 4 bytes and is provided as an overlay on an LLC header of a typical Ethernet frame. It should be apparent that in this exemplary embodiment the RBP header is provided to be 1 byte longer than the LLC header, which allows word alignment of other fields in the message. Further, by dimensioning the header portion as a 4-byte field, real-time performance of software processing is improved in environments using long-word architectures.

An RBP type field 202 of the header portion 202 overlays the DSAP field of the LLC header for identifying that the frame with which the header portion 200 is associated is an RBP frame rather than a conventional Ethernet frame or frame of other known protocols. The RBP type field 252 thus operates as an indicator to a processing entity and its software to process the remainder of the frame (or, frames in a multi-frame message) as a message that belongs to the RBP of the present invention.

Once a frame has been identified as an RBP frame, the remaining fields of the header portion 200 are used to control RBP processing. A mail box ID 204 is provided as an application-specific byte-long field for identifying a destination RBP queue. That is, when different types of information is transported as payload using the RBP frames, the mail box ID field 204 uniquely identifies them for segregating into separate queues associated with respective applications. For example, where SS7 signaling traffic is transported among the CEs (as may be the case in a presently preferred exemplary embodiment of the signaling server) in addition to other information via the RBP frames, the mail box ID 204 is advantageously utilized to separate the SS7 signaling traffic from non-SS7 traffic.

A multi-frame control field 206 is included in the RBP header 200 to indicate the total number or remaining number of frames involved in an RBP protocol data unit (PDU). Where messages take up more than a single RBP frame (which preferably comprises a maximum of 64 Kbytes in an exemplary embodiment of the present invention), the RBP PDU necessarily involves multiple frames and, accordingly, the multi-frame control field 206 of the leading frame of the PDU is operable to provide an indication to the processing entity to process the remainder of the frames as a single PDU. In the exemplary embodiment depicted in FIG. 5, the multi-frame control field 206 is comprised of a multi-frame bit (MFB) 210 which is set to 1 to indicate that the frame is part of a multi-frame PDU. The remaining 7 bits comprise a field 212 which corresponds to an integer value that indicates to the processing entity (software, hardware, firmware, or any combination) how many remaining frames of data are included in the PDU. It should be appreciated that since most RBP PDUs are in general expected to be single frames PDUs, testing for multi-frame condition comprises an extremely fast single-bit test which optimizes the processing cycles.

Continuing to refer to FIG. 5, a reserved field 208 is provided in the header portion 208 for future use and/or enhancements. For example, where additional levels of data integrity is needed (in addition to the link layer-level protections in the form of parity, checksum, or CRC), the reserved field 208 may be appropriately defined. Also, as further refinements are necessitated to accommodate different types of information and/or physical media, the bitmap of the reserved field 208 may be suitably modified. Until it is defined, the reserved field 208 is preferably initialized to all zeros, which allows future definitions in a backward-compatible fashion.

Referring now to FIG. 6, an exemplary PDU 250 of the RBP of the present invention is depicted therein. In this exemplary embodiment, a 14-byte DLH field 252 is appended to the 4-byte RBP header portion 200 described in greater detail hereinabove. In accordance with Ethernet frame formatting, destination and source MAC address fields are provided within the DLH field 252. Up to a maximum of 1,494 bytes of RBP payload 254 is provided for carrying multiple types of data (i.e., bearer traffic).

FIG. 7 depicts additional fields provided in an RBP frame for supporting SS7 bearer traffic as payload 254. A 2-byte time stamp field 258 and a transaction ID field 260 comprising 4 bytes are provided. An SS7 application data field 262 comprising up to 1,464 bytes is included in the payload portion 254. The time stamp field 258 is operable for monitoring cross-office switch performance and for calculating transport delays, e.g., MTP2 to MTP3 delays in SS7 signaling. In a presently preferred exemplary embodiment of the present invention, the time stamp is provided as a global system counter synchronized to a predetermined frame pulse, e.g., a 125 µsec frame pulse derived from the signaling server's system timing reference which gives a 125 µsec resolution with a timing interval of 8.192 seconds. This capability may also be used to synchronize the time-of-day clock in all CEs of the signaling server as well.

The transaction ID field 260 is used for monitoring individual point-to-point data paths with respect to any lost or duplicated messages. In the exemplary embodiment, the transaction ID field 260 is further refined into a 12-bit virtual path indicator (VPI) field 264 which identifies the source node, a 12-bit virtual channel indicator (VCI) field 266 which identifies a particular link interface card within the source node, and an 8-bit sequence number field 268 that keeps track of message sequence numbers (e.g., Forward and Backward Sequence Numbers (FSNs and BSNs) used for SS7 MSUs). It should be appreciated by those skilled in the art that refining the transaction ID field 260 into 12-bit VPI and VCI fields simplifies RBP transport over ATM. Furthermore, it is more memory-efficient to manage two 12-bit fields than a 24-bit flat address space.

Referring now to FIG. 8, depicted therein is a table 300 which illustrates the packaging of a 20-byte MSU in the Ethernet-compliant RBP format in accordance with the teachings of the present invention. A preamble 302 comprises 8 bytes. The DLH field 252 and RBP header portion 200 consume 14 and 4 bytes, respectively. In addition to the 2-byte time stamp field 258 and 4-byte transaction ID field 260, an SS7 application overhead field 304 takes up 4 bytes. The MSU 306 itself consumes 20 bytes in the exemplary RBP frame which includes a filler 308 of 12 bytes, a CRC 256 of 4 bytes and an inter-packet delay 310 that comprises 12 bytes. Overall, the frame comprises 76 bytes, of which the preamble, DLH, CRC, and inter-packet delay are required under the Ethernet format requirements.

Based upon the foregoing Detailed Description, it should be appreciated that the present invention provides a simple yet highly efficient and robust transport protocol scheme for transporting message information using low overhead and low latency frames for real-time processing. The RBP system provided in accordance herewith may preferably be provided to be Layer-1 neutral (i.e., independent of the exact physical layer implementation). Thus, the RBP frames can be provided on top of either Ethernet transmission or over ATM using ATM Adaptation Layer (AAL)-5.

Because in preferred embodiments the RBP frames do not have the routing-related overhead, protocol conversion and/or encapsulation is not necessary. Thus, the resultant lightweight RBP PDUs frames are operable to facilitate real-time processing as well as efficient bandwidth utilization, which are critical in a high-transaction environment such as the signaling server disposed in a telecommunications network. Further, limited address space provided in the RBP scheme is not only sufficient for uniquely identifying a rather smaller number of physical nodes, for example, 32 - 1024 CE nodes, but advantageously promotes software processing efficiency.

It is believed that the operation and construction of the present invention will be apparent from the foregoing Detailed Description. While the system and method shown and described have been characterized as being preferred, it should be readily understood that various changes and modifications could be made therein without departing from the scope of the present invention as set forth in the following claims. For instance, although the use of SS7 signaling message information has been particularly exemplified in some of the preferred exemplary embodiments, it should be understood that other types of message information may also be used for RBP payloads. Moreover, those skilled in the art should readily recognize that whereas Ethernet frame formats have been illustrated in greater detail, other known and hitherto unknown formats may be utilized for transporting the RBP data using low overhead, low latency PDUs provided in accordance with the teachings of the present invention. In addition, while the motivation for and the use of the RBP scheme is described in terms of a signaling server operable in a telecommunications network environment, the present invention is not limited in any way to such embodiments only. Accordingly, all these numerous modifications, substitutions, additions, combinations, extensions, etc. are considered to be within the ambit of the present invention whose scope is limited solely by the following claims.

## Claims

1. A real-time bearer protocol (RBP) structure for transporting payload among a plurality of interconnected nodes, comprising:
a data link header including a destination media access control (MAC) address, a source MAC address, and a length indicator, wherein said destination and source MAC addresses are associated with a select pair of said plurality of nodes;
an RBP header block including a plurality of portions, at least one of which portions is for indicating said payload's type; and
a variable data block for carrying said payload to be transported based on said destination and source MAC addresses of said select pair of nodes,
wherein said data link header, said RBP header block, and said variable data block are dimensioned as a frame that is at least substantially similar to a select frame format.

2. The RBP structure for transporting payload among a plurality of interconnected nodes as set forth in claim 1, wherein said select frame format comprises an Asynchronous Transfer Mode (ATM) frame.

3. The RBP structure for transporting payload among a plurality of interconnected nodes as set forth in claim 1, wherein said select frame format comprises an Ethernet frame.

4. The RBP structure for transporting payload among a plurality of interconnected nodes as set forth in claim 3, wherein said RBP header further includes a portion for indicating that said frame comprises an RBP frame.

5. The RBP structure for transporting payload among a plurality of interconnected nodes as set forth in claim 4, wherein said RBP header further includes a portion for indicating that said frame is part of a multi-frame protocol data unit (PDU).

6. The RBP structure for transporting payload among a plurality of interconnected nodes as set forth in claim 5, wherein said RBP header further includes a portion reserved for future use.

7. The RBP structure for transporting payload among a plurality of interconnected nodes as set forth in claim 6, wherein said RBP header is four-bytes long.

8. The RBP structure for transporting payload among a plurality of interconnected nodes as set forth in claim 7, wherein said data link header is fourteen-bytes long.

9. The RBP structure for transporting payload among a plurality of interconnected nodes as set forth in claim 7, wherein said variable data block is about 1,494 bytes.

10. The RBP structure for transporting payload among a plurality of interconnected nodes as set forth in claim 7, wherein said frame further comprises a cyclic redundancy check (CRC) portion.

11. The RBP structure for transporting payload among a plurality of interconnected nodes as set forth in claim 7, wherein said payload type is indicative of Signaling System No. 7 (SS7) message information.

12. The RBP structure for transporting payload among a plurality of interconnected nodes as set forth in claim 11, wherein said variable data block includes a time stamp portion.

13. The RBP structure for transporting payload among a plurality of interconnected nodes as set forth in claim 11, wherein said variable data block includes a virtual path indicator (VPI) portion.

14. The RBP structure for transporting payload among a plurality of interconnected nodes as set forth in claim 11, wherein said variable data block includes a virtual channel indicator (VCI) portion.

15. The RBP structure for transporting payload among a plurality of interconnected nodes as set forth in claim 11, wherein said portion for indicating that said frame is part of a multi-frame PDU comprises a plurality of bits to indicate the number of remaining frames in said multi-frame PDU.

16. The RBP structure for transporting payload among a plurality of interconnected nodes as set forth in claim 11, wherein said variable data block includes SS7 bearer traffic.

17. A method of transporting message information within a network element organized as a plurality of interconnected computing nodes, each computing node controlling a plurality of links, comprising the steps of:
receiving said message information on a particular link of said network element;
determining a destination media access control (MAC) address, a source MAC address associated with said message information;
packaging said message information and said destination and source MAC addresses into at least one frame of a real-time bearer protocol (RBP) data unit (PDU) having a payload block and an RBP header block; and
transporting said at least one frame of said RBP PDU to a computing node within said network element based on said destination MAC address.

18. The method of transporting message information within a network element as set forth in claim 17, wherein said RBP PDU comprises multiple frames, and further wherein said RBP header block of a leading frame of said multiple frames includes a portion for indicating that said leading frame is part of said multi-frame RBP PDU.

19. The method of transporting message information within a network element as set forth in claim 18, wherein said portion for indicating that said leading frame is part of said multi-frame RBP PDU comprises a plurality of bits to indicate an integer value indicative of remaining number of frames in said multi-frame RBP PDU.

20. The method of transporting message information within a network element as set forth in claim 17, wherein said at least one frame of said RBP PDU is dimensioned as a frame that is at least substantially similar to an Ethernet frame.

21. The method of transporting message information within a network element as set forth in claim 17, wherein said RBP header block includes a portion for indicating said payload's type.

22. The method of transporting message information within a network element as set forth in claim 21, wherein said payload type is indicative of Signaling System No. 7 (SS7) message information.

23. The method of transporting message information within a network element as set forth in claim 22, wherein said at least one frame comprises a time stamp portion.

24. The method of transporting message information within a network element as set forth in claim 22, wherein said at least one frame comprises a virtual path indicator (VPI) portion.

25. The method of transporting message information within a signaling server as set forth in claim 22, wherein said at least one frame comprises a virtual channel indicator (VCI) portion.
